Europäisches Patentamt

European Patent Office

Office européen des brevets

(11) Numéro de publication: **0 168 023**
**B1**

(12) # FASCICULE DE BREVET EUROPÉEN

(45) Date de publication du fascicule du brevet:
23.11.88

(51) Int. Cl.⁴: **G 01 V 9/04,** G 02 B 6/42

(21) Numéro de dépôt: **85108473.1**

(22) Date de dépôt: **09.07.85**

(54) **Dispositif opto-électronique de détection de passage d'objets.**

(30) Priorité: **11.07.84 FR 8411014**

(43) Date de publication de la demande:
**15.01.86 Bulletin 86/3**

(45) Mention de la délivrance du brevet:
**23.11.88 Bulletin 88/47**

(84) Etats contractants désignés:
**DE FR GB NL**

(56) Documents cité:
**GB-A-2 044 949**
**US-A-3 014 161**

(73) Titulaire: **SMH- ALCATEL Société anonyme dite:,
83, Boulevard de Sébastopol, F-75082 Paris Cedex
02 (FR)**

(72) Inventeur: **Meur, Jean- Pierre, 7, chemin des Clos,
F-91630 La Ville Du Bois (FR)**
Inventeur: **Vainpress, Frédéric, 10, rue de
Corvisart, F-75013 Paris (FR)**

(74) Mandataire: **Weinmiller, Jürgen, Lennéstrasse 9
Postfach 24, D-8133 Feldafing (DE)**

LIBER, STOCKHOLM 1988

## Description

La présente invention est relative aux dispositifs opto-électroniques de détection de passage d'objets, en particulier à ceux destinés à équiper des machines de traitement automatique, telles que notamment des machines de traitement de courrier.

Les détecteurs optiques sont de manière connue basés soit sur une détection de coupure du faisceau lumineux émis par une source de lumière, lors du passage de l'objet, soit sur une détection du faisceau lumineux issu de la source et renvoyé sur un récepteur lors du passage de l'objet. Dans les détecteurs fonctionnant selon le premier mode cité, la source et le récepteur sont montés face à face d'un côté et de l'autre de la trajectoire de défilement des objets ; dans ceux fonctionnant selon le second mode, la source et le récepteur sont disposés côte à côte, d'un même côté de la trajectoire de défilement des objets.

Dans de nombreux détecteurs optiques, on associe à la source de lumière des circuits électroniques de commande pour permettre une différenciation entre la lumière émise par la source et la lumière ambiante.

Ces circuits peuvent comporter un oscillateur à rapport cyclique constant, de fréquence d'oscillation fixe de l'ordre de 20 k Hertz, pilotant un étage de puissance commandant une diode émissive dans le domaine du visible, qui constitue la source de lumière.

De manière comparable, on associe au récepteur, constitué par une photodiode, des circuits électroniques de traitement du signal reçu en vue de sa détection puis de sa comparaison avec un signal de référence fixe ou variable. Ces derniers circuits peuvent comporter un convertisseur courant/tension du signal issu de la photodiode réceptrice suivi d'un amplificateur de tension, d'un filtre type passe haut du signal amplifié, d'un détecteur type intégrateur assurant la détection de variation du niveau du signal reçu lors du passage de l'objet à détecter puis d'un comparateur et d'un étage de sortie du signal.

Ces circuits électroniques de commande de la diode et de traitement du signal reçu par la photodiode peuvent avantageusement être regroupés, avec la diode et la photodiode, dans un boîtier équipé de conduits optiques le traversant. Ces conduits optiques sont, lors de la mise de l'équipement en boîtier effectuée en usine, couplés à la diode et à la photodiode respectivement, fixes sur les parois du boîtier qu'ils traversent et mis à une longueur convenable préatablie pour assurer, dans les conditions définies d'utilisation du capteur final résultant, la liaison entre l'équipement interne au boîtier et les points en vis-à-vis ou côte-à-côte de détection de passage d'objets. Un tel capteur ou les capteurs analogues rentrant dans une machine automatisée reçoivent leur alimentation par cable électrique; leur signal électrique de sortie est transmis par câble électrique individuel à un circuit d'exploitation monté sur carte de circuit imprimé, à partir duquel est assurée la commande automatique de la machine. En outre leur emplacement dans une machine automatisée est définitivement conditionné par la longueur donnée aux conduits optiques.

La présente invention porte sur un dispositif opto-électronique de détection de passage d'objets, pour machine à commande automatisée à partir de ces détections, retenant notamment le principe connu de positionnement du boîtier émetteur-récepteur à distance des points de détection de passage d'objets, par utilisation de conduits optiques, mais d'une part évitant tout problème relatif à l'emplacement du dispositif dans une machine, lié à la longueur qui était donnée aux conduits optiques et d'autre part présentant une conception permettant la suppression des câblages électriques nécessaires au raccordement de chaque dispositif au circuit d'exploitation des signaux de détection et à son alimentation, de manière à constituer un dispositif industriel compact d'utilisation très aisée.

La présente invention a donc pour objet un dispositif opto-électronique de détection de passage d'objets, à équipement opto-électronique monté dans un boîtier et couplé à des fibres optiques sortant du boîtier, caractérisé par le fait que ledit équipement opto-électronique est porté par une même plaquette et que ledit boîtier est constitué par un corps d'un seul tenant comportant une cavité dans une partie dite principale, constituant le logement de ladite plaquette et équipée de moyens de positionnement et de maintien de ladite plaquette, d'un côté, dit côté avant, une partie terminale avant bordant à l'avant ladite cavité et équipée de passages débouchant dans ladite cavité pour lesdites fibres et de serre-fils pour le maintien de ces fibres et, à l'opposé, formant l'extrémité arrière, un volet rabattable définissant l'accès de ladite plaquette dans la cavité et assurant son blocage.

Selon une caractéristique de l'invention la ' plaquette porte des broches électriques reliées audit équipement opto-électronique qu'elle porte et dont les extrémités libres débordent sur le fond dudit boîtier, pour un embrochage direct dudit dispositif sur une carte de circuit imprimé.

Avantageusement, le circuit électronique de l'équipement sera intégré sur la plaquette pour sa miniaturisation tandis que la diode et la photodiode-rentrant dans l'équipement seront montées d'un même côté en bout de la plaquette et raccordées au circuit. Le dispositif résultant sera traité comme un composant discret pour son montage sur une carte de circuit imprimé portant le circuit d'exploitation.

D'autres caractéristiques et les avantages de la présente invention ressortiront de la description détaillée d'un exemple de réalisation illustré dans le dessin ci-annexé.

Dans ce dessin:

- les figures 1 et 2 sont des vues de face et de dessus du dispositif opto-électronique, selon l'invention, représenté monté sur une carte de circuit imprimé,
- la figure 3 est une vue de dessous du boîtier du dispositif opto-électronique, donnée à échelle agrandie avec arrachements partiels,
- la figure 4 est une vue en coupe selon la ligne IV-IV de la figure 3,
- la figure 5 et la figure 6 sont des vues du boîtier, selon les flèches V et VI de la figure 4,
- les figures 7 et 8 sont deux vues en coupe du dispositif opto-électronique, respectivement selon la ligne VII-VII de la figure 8 et la ligne VIII-VIII de la figure 7
- la figure 9 est le schéma synoptique du circuit opto-électronique rentrant dans un dispositif opto-électronique de détection de passage d'objets dans une macnine de traitement automatique de courrier.

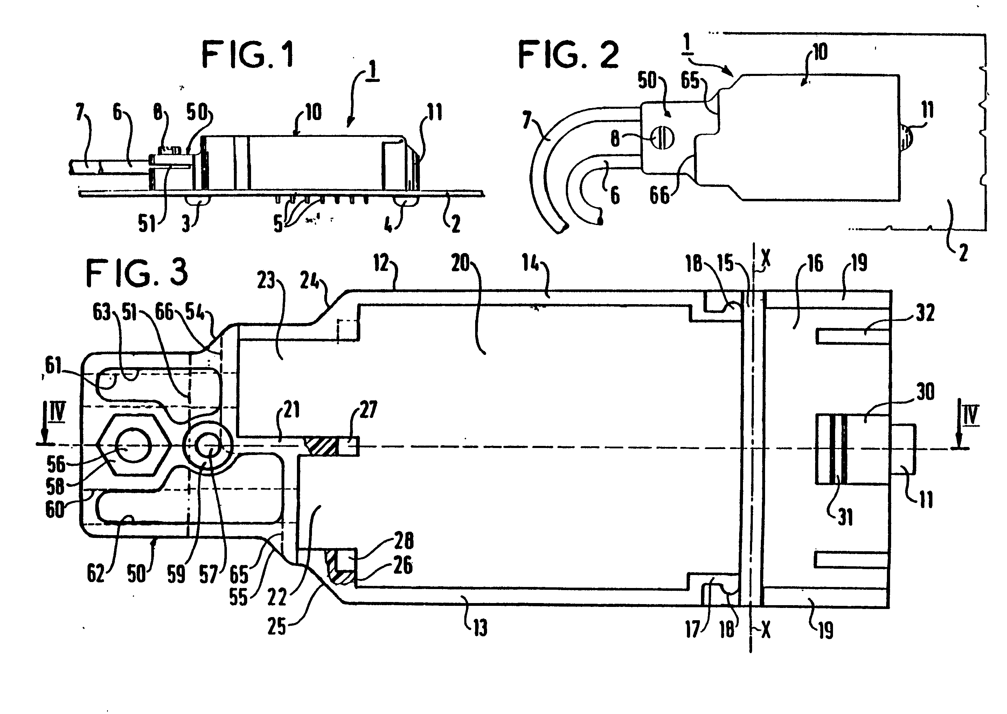

En regard des figures 1 et 2, on voit que le dispositif opto-électronique selon l'invention, illustré tel qu'il sera avantageusement utilisé en pratique, se présente sous la forme d'un boîtier 1 renfermant l'équipement opto-électronique non visible du dispositif et reposant sur une carte de circuit imprimé 2, à laquelle il est fixé par une paire de vis 3 et 4. Cette carte de circuit imprimé 2 constitue une carte de circuit d'exploitation des signaux électriques élaborés par le dispositif opto-électronique qui lui est raccordé par des broches électriques 5 sortant du boîtier 1 et soudées au circuit imprimé de la carte 2, par lesquelles le dispositif opto-électronique reçoit son alimentation et transmet les signaux électriques qu'il élabore.

Ce boîtier 1 se présente lui-même formé d'une partie principale 10 sensiblement parallélépipédique se prolongeant d'un côté dit côté avant par une partie terminale avant 50. La partie terrminale 50 a sa face supérieure en décrochement sous le niveau de la face supérieure de la partie principale 10 et ses faces latérales en retrait sur celles de la partie principale, les bords inférieurs des parois latérales de ces deux parties 10 et 50 étant au même niveau.

La partie terminale avant 50 présente une fente horizontale 51, sensiblement au tiers de sa hauteur à partir de sa paroi supérieure. Elle reçoit, au niveau de la fente 51, les extrémités de deux fibres optiques gainées 6 et 7 qui y sont maintenues par un écrou 8 d'un système de serrage de ses deux parties définies de part et d'autre de la fente, formant serre-fil dans cette partie terminale rendue élastiquement déformable.

Pour la fixation du boîtier 1 sur la carte de circuit imprimé 2, on voit aussi que les vis 3 et 4 sont insérées, pour l'une d'elles 3, dans la partie terminale 50 entre le fond de la fente 51 qu'elle présente et la partie principale 10 et, pour l'autre 4, dans la paroi de la partie principale 10, opposée à la partie terminale avant et dite paroi arrière, présentant à cet effet, extérieurement, une nervure médiane 11 à contour arrondi, sur sa hauteur.

Dans les figures 3, 4, 5 et 6 on a illustré le boîtier 1 destiné à recevoir l'équipement optoélectronique monté en totalité sur une même plaquette et dont l'ensemble constitue le dispositif opto-électronique.

Ce boîtier 1 est constitué par un corps d'un seul tenant réalisé en matière plastique et issu directement de moulage.

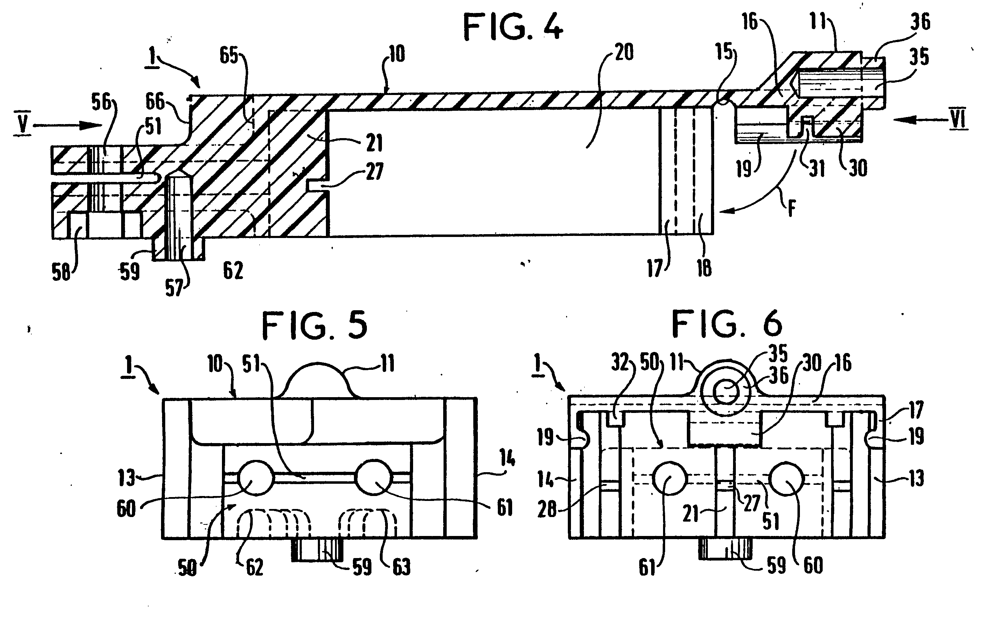

La partie principale 10 définit une cavité 20 ouverte sur fond du boîtier 1. Cette partie principale 10 se présente sous la forme d'une plaque 12 bordée latéralement par la partie terminale avant 50 et deux flasques 13 et 14, qui délimitent sur trois côtés la cavité 20. A l'opposé de la partie terminale 50, cette plaque 12 déborde sur les deux flasques 13 et 14 et présente sur sa face interne une rainure 15 qui délimite une portion terminale formant un volet 16 rabattable autour de l'axe X-X (figure 3) pour la constitution, ainsi que schématisé par la flèche F (figure 4), de la quatrième paroi latérale de la cavité 20, à l'extrémité arrière du boîtier 1.

Ce volet 16 est encliquetable sur les bords adjacents des deux flasques 13 et 14. A cet effet, chacun des deux bords verticaux de ces flasques forme une patte d'accrochage, telle que 17, parallèle au flasque qui la porte mais en retrait sur ce flasque vers l'intérieur de la cavité, qui se termine par un bossage 18 en relief vers l'extérieur de la cavité. En correspondance, le volet 16 présente, sur la face interne de la plaque 12 à laquelle il appartient, deux rebords se terminant par deux bossages arrondis tels que 19 le long de ses deux bords, susceptibles de s'engager derrière les bossages 18 des pattes d'accrochage 17.

A l'opposé du volet rabattable 16, du côté de la cavité 20, la partie terminale avant 50 forme un décrochement sensiblement à mi-largeur de la cavité, se prolongeant sur une courte distance vers l'intérieur de la cavité en constituant à l'avant ou en bout de la cavité une cloison verticale 21 sensiblement médiane. Cette cloison 21 et les portions des flasques 13 et 14 en regard de cette cloison définissent entre elles deux compartiments verticaux 22 et 23 ayant, sur la partie terminale avant 50, leur fond décalé.

Avantageusement, le bout ou avant compartimenté de la cavité 20 est de largeur moindre que celle de la cavité elle-même mais supérieure à celle de la partie terminale avant 50. Deux pans inclinés 24 et 34 et 25 et 35 font extérieurement d'un côté et de l'autre ces transitions, tandis qu'à l'intérieur de la cavité 20, au niveau de l'extrémité de la cloison 21 un épaulement tel que 26 sur chacun des flasques rattrape la transition entre le bout compartimenté de la cavité et la cavité elle-même, donnant une épaisseur accrue aux flasques à ce niveau.

L'extrémité de la cloison 21 présente à mi-hauteur du boîtier une fente horizontale 27, de faible profondeur. En regard de l'extrémité de cette cloison, chacun des flasques 13 et 14 présente à même niveau une encoche 28 dans l'épaulement qu'il présente, analogue à la fente 27. La fente 27 et l'encoche 28 dans chacun des flasques permettront le maintien d'une plaquette d'équipement opto-électronique à loger dans la cavité 20, par engagement du bord avant et des deux coins avant de cette plaquette dans ces fentes respectives.

Pour le maintien d'un telle plaquette d'équipement opto-électronique, le volet 16 présente sur sa face intérieure à la cavité, une arête centrale 30. Cette arête à une fente 31 située sensiblement a mi-largeur du volet et analogue à la fente 27 dans la cloison 21, venant, lorsque le volet est rabattu pour fermer la cavité, au même niveau que les fentes 27 et 28. Cette fente 31 recevra le bord arrière de la plaquette d'équipement opto-électronique dont le bord avant a précédemment été engagé dans les fentes 27 et 28, lorsque le volet 16 est rabattu et vient s'encliqueter sur les pattes d'accrochage 17 des flasques.

Le volet 16 présente aussi, du même côté que l'arête 30, de part et d'autre de celle-ci, deux nervures telles que 32. Ces nervures parallèles aux petits côtés du volet sont de section droite rectangulaire. Elles sont moins hautes que l'arête 30, leur niveau est légèrement supérieur à celui donné par le fond de la fente 31. Lorsque la plaquette d'équipement opto-électronique précitée est insérée dans la cavité 20 et que le volet 16 est rabattu pour fermer l'arrière de la cavité, les nervures 32 viennent en appui contre le bord arrière de la plaquette et constituent alors des butées de maintien en position de la plaquette dans la cavité.

En outre, on voit que la nervure 11 que présente le boîtier 1 (figures 1 et 2) est formée sur la face du volet 16, opposée à celle portant l'arête 31. Les figures 4 et 6 notamment, laissent apparaître que cette nervure 11 présente un trou borgne 35 ouvert en bout du volet se prolongeant sur l'extrémité du volet dans un ergot cylindrique 36.

La partie termale 50, forme quant à elle un petit pavé à l'avant de la partie principale 10. Ce pavé, considéré selon la hauteur du boîtier 1 présente un trou 56 le traversant de part en part et un trou borgne 57 débouchant sur le fond du boîtier (figures 3 et 4). Ces deux trous 56 et 57 sont pratiquement alignés, leurs axes étant dans le plan vertical médian de la cloison 21. Alors que le trou débouchant 56 se termine sur le fond du boîtier en une large ouverture 58, de forme hexagonale, pour servir de logement à une tête de tige filetée assurant le blocage en rotation de la tige dans son logement, le trou borgne 57 se prolonge au-delà du niveau du fond du boîtier dans un ergot cylindrique 59.

Dans la direction donnée par la longueur du boîtier 1, ce pavé présente, outre la fente 51, deux trous 60 et 61 débouchant à l'avant du boîtier et dans la cavité 20, de part et d'autre de la cloison 21 (figures 3 et 5). Ces deux trous 60 et 61 ont leurs axes dans le plan médian de la fente 51 qui les coupe sur une partie de leur longueur. Ces trous 60 et 61 constituent les logements des extrémités des deux fibres optiques 6 et 7 (figures 1 et 2).

Sur la face inférieure du boîtier 1, ce pavé présente aussi deux empreintes en creux 62 et 63, de part et d'autre des trous 56 et 57 et respectivement au droit des trous 60 et 61 servant de logement aux fibres optiques. Ces empreintes 62 et 63, non ouvertes sur la face avant ou les faces latérales du boîtier, confèrent à la partie terminale avant 50, au niveau des trous 60 et 61, une déformation suffisante pour le blocage des fibres sans risque d'écrasement ou d'endommagement de ces fibres lors du serrage des deux parties définies par la fente 51. Dans la figure 3, en particulier, on voit que l'empreinte 62, correspondant au compartiment 22 le moins profond en bout de la cavité 20, est plus longue que l'empreinte 63.

Dans les figures 2, 3 et 4, on voit que la face supérieure de ce pavé, au-dessous du niveau donné par la face supérieure du boîtier suit le profil défini par les fonds des deux compartiments, en bout de la cavité, ainsi que schématisé par les deux épaulements 65 et 66 décalés l'un de l'autre qu'elle forme avec la partie supérieure du boîtier.

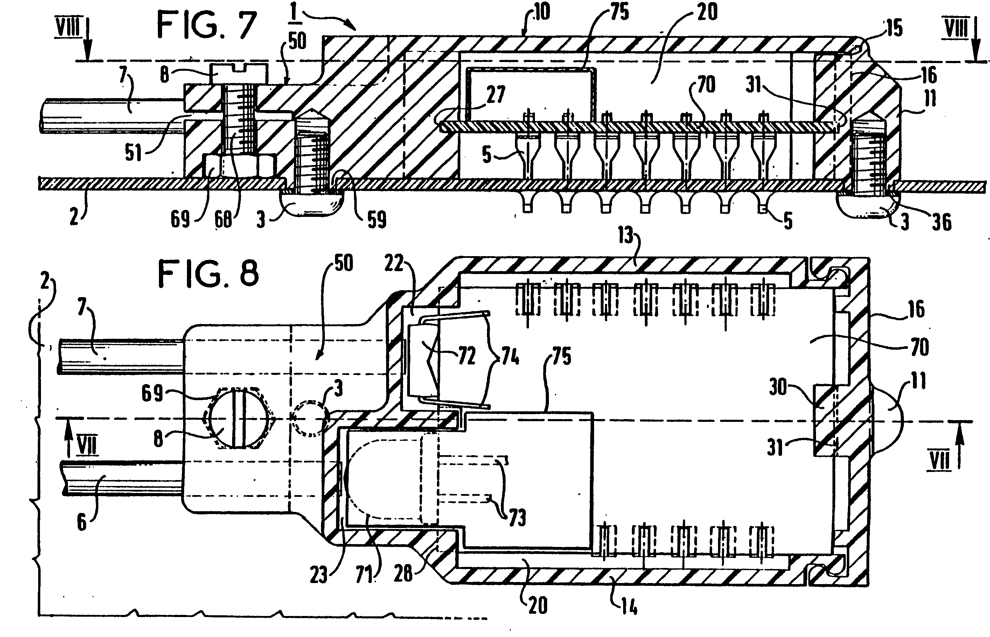

Dans les figures 7 et 8 on a illustré le dispositif opto-électronique résultant. L'équipement opto-électronique de ce dispositif est monté sur la plaquette 70 insérée dans la fente et les encoches prévues à cet effet en bout de la cavité et dans la fente 31 du volet arrière 16 rabattu et encliqueté sur les bords latéraux 13 et 14 du boîtier. Les butées 32 portées par le volet 16 assurent alors le blocage en position de la plaquette équipée 70 dans la cavité 20.

La plaquette 70 reçue dans son boîtier 1 porte sur sa face supérieure les divers composants rentrant dans l'équiqement, avantageusement montés sous forme de circuits hybrides, non représentés. Elle porte en bout, une diode émettrice 71 et une photodiode 72 dont les sorties électriques respectives, telles que 73 pour la diode et 74 pour la photodiode, sont sur la partie adjacente de la plaquette raccordées aux circuits hybrides qu'elle porte. Cette diode et la photodiode viennent ainsi se loger dans les compartiments distincts 23 et 22 prévus en bout de la cavité, lors de l'insertion de la plaquette 70.

Un blindage 75, monté sur la plaquette 70 recouvre la diode 71 et prolonge le compartiment 23 qui reçoit la diode 71, vers l'intérieur de la cavité 20, sur la plaquette 70, en la fermant pour assurer une meilleure isolation de la photodiode. Ce blindage est ouvert à l'avant, sa partie avant qui recouvre la diode s'engage dans le compartiment 23 et vient doubler les parois latérales et supérieure du compartiment. Il est fermé à l'arrière ; sa partie arrière, sur la plaquette, vient prolonger la cloison 21, longer le bord correspondant de la plaquette et doubler la paroi supérieure correspondante de la cavité 20.

Cette plaquette 70 montée dans le boîtier porte également les broches 5 précitées, s'étendant en deux rangées verticales le long de ses bords longitudinaux sur sa face inférieure et reliées à l'équipement qu'elle porte à travers elle. Ces broches 5 ont leurs extrémités venant déborder sur le fond du boîtier.

Outre la plaquette 70 ainsi équipée montée dans la cavité 20, le boîtier 1 reçoit dans sa partie terminale avant les deux fibres optiques 6 et 7. Ces fibres, glissées dans leurs logements respectifs, débouchent dans les compartiments 22 et 23, au droit de la diode 71 et de la face sensible de la photodiode 72, respectivement. Elles sont bloquées dans la partie terminale avant par serrage de l'écrou 8 sur une tige filetée 68, à tête terminale hexagonale 69 bloquée dans le fond de cette partie 50.

Un tel mode de montage des fibres optiques, pour leur couplage à la diode et à la photodiode et leur maintien sur le boîtier, est particulièrement simple à réaliser. Ceci a pour avantages de permettre qu'il soit réalisé sur les lieux d'utilisation du dispositif et surtout que les fibres utilisées soient prélevées d'une bobine débitrice ou analogue et mises à la longueur adéquate au moment de l'utilisation du dispositif et donc en fonction de son emplacement alors choisi dans la machine qui le reçoit.

Le boîtier 1 équipé de la plaquette d'équipement opto-électronique et de ses fibres couplées respectivement à la diode et à la photodiode portées par la plaquette, est en utilisation pratique très avantageusement monté comme un composant sur la carte de circuit imprimé 2 portant un circuit d'exploitation (non représenté). Les vis 3 et 4 précitées assurent sa fixation ; elles sont engagées dans leurs logements 57 et 35 prévus dans le boîtier (figure 4) à travers cette carte 2. Lors de ce montage, les extrémités des broches 5 viennent s'engager dans des trous métallisés prévus à leur effet dans la carte, et y sont soudées.

Les ergots cylindriques 59 et 36, précités en relief sur le fond de sa partie terminale avant 50 et sur l'extrémité du volet et engagés dans des passages correspondants de la carte 2, contribuent au blocage en position du boîtier 1 équipé sur la carte 2. Ils évitent aussi au montage la transmission d'efforts possibles exercés sur les broches 5 lors des opérations d'insertion des vis 3 et 4, qui pourraient endommager leur raccordement avec l'équipement opto-électronique.

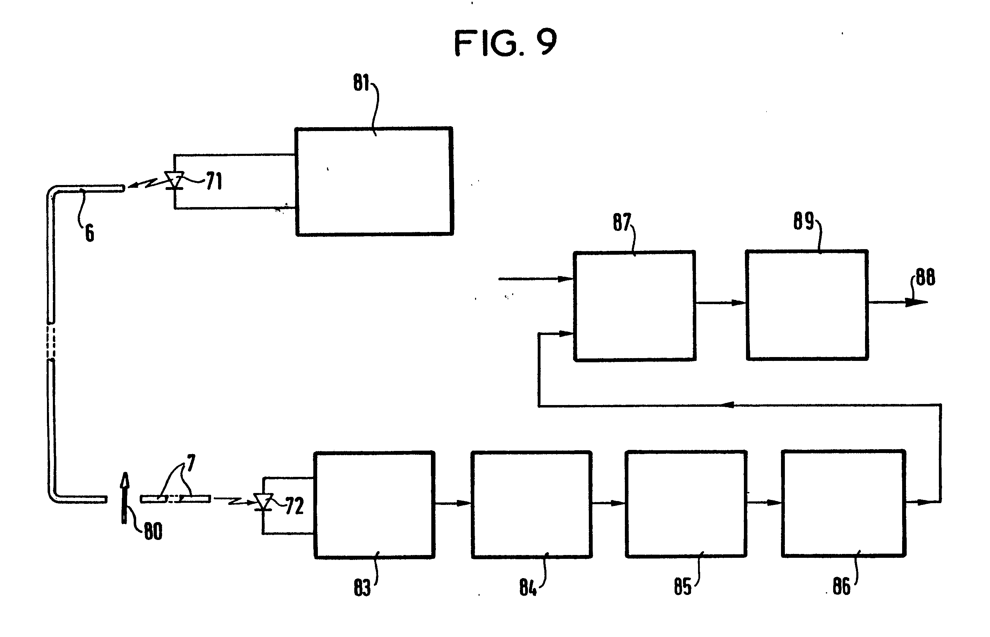

Dans la figure 9, on a illustré un circuit opto-électronique monté sur la plaquette 70 précitée du dispositif représenté dans les figures 7 et 8. Ce circuit constitue un circuit de détection de passages d'objets, destiné en particulier à équiper une machine automatique de traitement de courrier.

On y a représenté la diode 71 couplée à la fibre optique 6, dite fibre émettrice et la photodiode 72 également couplée à sa fibre optique 7 dite fibre réceptrice. On a schématisé par la flèche 80 un objet à détecter lors de son passage entre les extrémités libres des fibres.

Dans ce circuit, la diode 71 est commandée par un étage oscillateur et de puissance 81. La lumière émise par la diode, avantageusement dans le domaine du visible et proche de l'infrarouge, est ainsi hachée pour la différencier de la lumière ambiante. Elle est transmise par la fibre émettrice au point de détection.

La photodiode 72 est reliée à un convertisseur courant/tension 83 suivi d'un amplificateur 84 puis d'un filtre 85. Ce filtre est relié à un détecteur 86, lui-même relié à un comparateur 87. Le signal issu du comparateur est délivré sur une sortie 88 à travers un étage de sortie 89, en vue de son exploitation. Le filtre 85 permet d'éliminer les fréquences parasites contenues dans le signal issu de la photodiode. Le détecteur 86 assure la détection des variations de ce signal filtré lors du passage de l'objet devant la fibre réceptrice, il est constitué par un circuit intégrateur. Dans le comparateur le niveau du signal reçu, précédemment détecté, est comparé à un signal de référence fixe ou ajustable, le signal délivré traduit le passage ou non d'un objet devant la fibre réceptrice. La transmission du signal élaboré par le comparateur vers le circuit d'utilisation est faite à travers l'étage de sortie. L'ensemble de ce circuit électronique, associé à la diode 71 et à la photodiode 72, est avantageusement intégré sur la plaquette 70 précitée. Le dispositif opto-électronique résultant équipé de ses fibres directement couplées à la diode et à la photodiode se trouve directement embrochable sur toute carte de circuit imprimé de circuit d'exploitation sur laquelle il est donc traité comme un composant discret. Ceci évite tout problème de câblage électrique pour son alimentation d'une part et pour l'exploitation de ses signaux de détection d'autre part.

La présente invention a été décrite en regard de l'exemple de réalisation illustré dans les dessins. Il est évident que l'on peut y apporter des modifications de détail et/ou remplacer certains moyens par d'autres équivalents sans pour autant sortir du cadre de cette invention.

**Revendications**

1. Dispositif opto-électronique de détection de passage d'objets, à équipement opto-électronique monté dans un boîtier et couplé à des fibres optiques sortant du boîtier, caractérisé par le fait que ledit équipement opto-électronique est porté par une même plaquette (70) et que ledit boîtier (1) est constitué par un corps d'un seul tenant comportant une cavité (20) dans une partie dite principale (10), constituant le logement de ladite plaquette et équipée de moyens de positionnement et de maintien (27, 28, 31) de ladite plaquette (70), d'un côté, dit côté avant, une partie terminale avant (50) bordant à l'avant ladite cavité et équipée de passages (60, 61) débouchant dans ladite cavité pour lesdites fibres (6, 7) et de serre-fils (8, 68, 69) pour le maintien de ces fibres et, à l'opposé, formant l'extrémité arrière, un volet rabattable (16) définissant l'accès de ladite plaquette (70) dans la cavité et assurant son blocage.

2. Dispositif selon la revendication 1, caractérisé par le fait que ladite cavité (20) est ouverte sur le fond du boîtier (1).

3. Dispositif selon l'une des revendications 1 et 2, caractérisé par le fait que ladite plaquette porte des broches électriques reliées audit équipement électro-optique qu'elle porte et dont les extrémités libres débordent sur le fond dudit boîtier, pour un embrochage direct dudit dispositif sur une carte de circuit imprimé.

4. Dispositif selon l'une des revendications 1 à 3, caractérisé par le fait que ledit boîtier comporte une cloison (21) définissant sur la largeur et à l'avant de ladite cavité (20) deux compartiments (22, 23), constituant des logements individuels pour une diode (71) et une photodiode (72) montées sur le bord correspondant de ladite plaquette (70).

5. Dispositif selon la revendication 4, caractérisé par le fait que lesdits moyens de positionnement et de maintien de la plaquette (70) comportent, des fentes (27, 31), sensiblement à mi-hauteur du boîtier, dans ladite cloison (21) et à niveau correspondant dans une arête (30) en relief sur la face intérieure à la cavité dudit volet (16).

6. Dispositif selon la revendication 5, caractérisé par le fait que lesdits moyens de positionnement et de maintien de ladite plaquette (70) comportent, en outre, des encoches (28) dans des épaulements (26) formés intérieurement à l'avant de la cavité sur ses parois latérales (13, 14).

7. Dispositif selon l'une des revendication 5 et 6, caractérisé par le fait que ledit volet (16) présente, en outre, en relief sur sa face intérieure à ladite cavité des butées (32) de blocage de ladite plaquette.

8. Dispositif selon l'une des revendications 1 à 7, caractérisé par le fait que les bords dudit volet (16) et les bords des parois adjacentes (13, 14) limitant ladite cavité (20) ont des profils complémentaires encliquetables.

9. Dispositif selon l'une des revendications 1 à 8, caractérisé par le fait que ladite partie terminale avant (50) comporte une fente (51) coupant lesdits passages sur une partie de leur longueur et un trou (56) la traversant de part en part perpendiculairement à la fente pour permettre un serrage desdites fibres (6, 7).

10. Dispositif selon l'une des revendications 4 à 7, caractérisé par le fait qu'il comporte un blindage (75) monté sur ladite plaquette venant prolonger et fermer le compartiment (23) recevant ladite diode (71).

**Patentansprüche**

1. Optoelektronische Vorrichtung zur Feststellung des Durchgangs von Gegenständen, mit einer in einem Gehäuse untergebrachten optoelektronischen Anlage, die an aus dem Gehäuse herausgeführte optische Fasern angeschlossen ist, dadurch gekennzeichnet, daß die optoelektronische Anlage von einer gemeinsamen Platte (70) getragen wird und das Gehäuse (1) aus einem einteiligen Körper besteht, welcher einen Hohlraum (20) in einem "Hauptteil" genannten Abschnitt (10) aufweist, der die Platte aufnimmt und der mit Mitteln zur Ausrichtung und Halterung (27, 28, 31) der Platte (70) versehen ist, wobei an einem "Vorderende" genannten Ende ein vorderer Endabschnitt (50) den Hohlraum begrenzt und mit in den Hohlraum führenden Durchgängen (60, 61) für die Fasern (6, 7) und mit Klemmen (8, 68, 69) zur Halterung der Fasern versehen ist, während am gegenüberliegenden hinteren Ende eine umklappbare Klappe (16) den Eingang der Platte (70) in den Hohlraum definiert und ihre Arretierung sichert.

2. Vorrichtung nach Anspruch 1, dadurch gekennzeichnet, daß der Hohlraum (20) zum Boden des Gehäuses (1) hin offen ist.

3. Vorrichtung nach einem der Ansprüche 1 und 2, dadurch gekennzeichnet, daß die Platte elektrische Kontakte trägt, welche mit der optoelektronischen Anlage verbunden sind und deren freie Enden aus dem Boden des Gehäuses zum direkten Anschliessen der Vorrichtung an eine Druckschaltungsplatte herausragen.

4. Vorrichtung nach einem der Ansprüche 1 bis 3, dadurch gekennzeichnet, daß das Gehäuse eine Zwischenwand (21) besitzt, welche im vorderen Bereich des Hohlraumes (20) der Breite nach zwei Kammern (22, 23) begrenzt, die getrennte Unterbringungsplätze für eine Diode (71) und eine Fotodiode (72), welche auf dem entsprechenden Rand der Platte montiert sind, bilden.

5. Vorrichtung nach Anspruch 4, dadurch gekennzeichnet, daß die Mittel zur Ausrichtung und Halterung der Platte (70) Schlitze (27, 31) in der Zwischenwand (21) auf im wesentlichen halber Höhe des Gehäuses sowie in gleicher Höhe in einem Anschlag (30) umfassen, der an der Innenfläche der Klappe (16) zum Hohlraum hin vorsteht.

6. Vorrichtung nach Anspruch 5, dadurch gekennzeichnet, daß weiter die Mittel zur Ausrichtung und Halterung der Platte (70) weiter Einschnitte (28) in Schultern (26) umfassen, welche innen an den Seitenwänden (13, 14) des Hohlraums in dessen vorderem Teil angebracht sind.

7. Vorrichtung nach einem Ansprüche 5 und 6, dadurch gekennzeichnet, daß weiter die Klappe (16) an der zum Hohlraum weisenden Fläche vorspringende Anschläge (32) zur Arretierung der Platte aufweist.

8. Vorrichtung nach einem der Ansprüche 1 bis 7, dadurch gekennzeichnet, daß die Ränder der Klappe (16) und die Ränder der benachbarten, den Hohlraum (20) begrenzenden Wände (13, 14) einander ergänzende Verriegelungsprofile aufweisen.

9. Vorrichtung nach einem der Ansprüche 1 bis 8, dadurch gekennzeichnet, daß der vordere Endabschnitt (50) einen die Durchgänge über einen Teil ihrer Länge durchschneidenden Schlitz (51) und ein Loch (56) aufweist, welches den Endabschnitt senkrecht zum Schlitz ganz durchdringt und das Festspannen der Fasern (6, 7) gestattet

10. Vorrichtung nach einem der Ansprüche 4 bis 7, dadurch gekennzeichnet, daß sie eine auf der Platte montierte Abschirmung (75) aufweist, welche die Kammer (23) zur Aufnahme der Diode (71) verlängert und abschließt.

## Claims

1. An opto-electronic device for detecting the passage of objects, wherein the opto-electronic equipment is mounted inside a case and coupled to optical fibres emerging from the case, characterized in that said opto-electronic equipment is supported by a common plate (70) and that the case (1) is constituted of a one-piece body comprising a cavity (20) within a so-called main portion (10), which constitutes the housing of said plate and is provided with means (27, 28, 31) for positioning and securing said plate (70) at a so-called front side, a front end terminal portion (50) closing said cavity at the front side being provided with passages (60, 61) opening into said cavity for receiving said fibres (6, 7) and cable clamps (8, 68, 69) for securing these fibres, and, at the opposite end, constituting the rear end, a hinged flap (16) defining the access to said plate (70) in the cavity and keeps it locked.

2. A device according to claim 1, characterized in that the cavity (20) is open on the bottom of the case (1).

3. A device according to one of claims 1 and 2, characterized in that the plate bears electrical contacts connected to its opto-electronic equipment, the free ends of which project on the bottom of said case for direct plug-in of said device into a printed circuit board.

4. A device according to any one of claims 1 to 3, characterized in that said case comprises a partition (21) defining along the width and at the front end of said cavity (20) two compartments (22, 23) which constitute separate lodgings for a diode (71) and a photodiode (72) mounted on the corresponding border of the plate (70).

5. A device according to claim 4, characterized in that the means for positioning and securing the plate (70) comprise slots (27, 31) provided substantially at mid-height of the case in said partition (21) and of a corresponding level in a stop edge (30) projecting on the inner face of the flap (16) directed to the cavity.

6. A device according to claim 5, characterized in that said means for positioning and securing the plate (70) further comprise notches (28) in shoulders (26) formed inside at the front side of the cavity on its lateral walls (13, 14).

7. A device according to any one of claims 5 and 6, characterized in that the flap (16) further presents stops (32) for blocking said plate projecting on its inner face directed to the cavity.

8. A device according to any one of claims 1 to 7, characterized in that the edges of said flap (16) and the edges of the adjacent walls (13, 14) delimiting said cavity (20) are provided with complementary clamping profiles.

9. A device according to any one of claims 1 to 8, characterized in that said front terminal portion (50) comprises a slot (51) intersecting said passages along a certain proportion of their length, and a hole (56) traversing said portion entirely and perpendicular to the slot for allowing to tighten said fibres (6, 7).

10. A device according to any one of claims 4 to 7, characterized in that it comprises a shielding (75) mounted on said plate and extending and closing the compartment (23) receiving said diode (71).

# FIG.1

# FIG. 2

# FIG. 3

0168023

# FIG. 4

# FIG. 5

# FIG. 6

0 168 023

FIG. 7

FIG. 8

FIG. 9